(19) Europäisches Patentamt
European Patent Office
Office européen des brevets

(11) Veröffentlichungsnummer : **0 222 274 B1**

(12) **EUROPÄISCHE PATENTSCHRIFT**

(45) Veröffentlichungstag der Patentschrift : **17.08.88**

(51) Int. Cl.[4] : **C 07 C103/78**, C 07 C102/00, A 01 N 37/26

(21) Anmeldenummer : **86115112.4**

(22) Anmeldetag : **31.10.86**

(54) **2-Hydroxybenzamide.**

(30) Priorität : **13.11.85 JP 252824/85**

(43) Veröffentlichungstag der Anmeldung : **20.05.87 Patentblatt 87/21**

(45) Bekanntmachung des Hinweises auf die Patenterteilung : **17.08.88 Patentblatt 88/33**

(84) Benannte Vertragsstaaten : **BE CH DE FR GB IT LI NL**

(56) Entgegenhaltungen :
**JP-A-59 204 161**
**CHEMICAL ABSTRACTS, Band 102, Nr. 1, 7. Jänner 1985, Columbus, Ohio, USA KUREKA CHEMICAL INDUSTRY CO., LTD. "Antifungal N-(1-haloalkoxy-2,2,2-trichloroethyl)salicylamides" Seite 539, Spalte 2, Zusammenfassung-Nr. 5 960x**
**CHEMICAL ABSTRACTS, Band 98, Nr. 19, 9. Mai 1983, Columbus, Ohio, USA NIPPON KAYAKU CO., LTD. "2-Hydroxybenzamide derivatives" Seite 488, Spalte 1, Zusammenfassung-Nr. 160 445a**

(73) Patentinhaber : **NIHON TOKUSHU NOYAKU SEIZO K.K.**
**No.4, 2-chome, Nihonbashi Honcho Chuo-ku**
**Tokyo 103 (JP)**

(72) Erfinder : **Kurahashi, Yoshio**
**47-15, Oya-machi**
**Hachioji-shi Tokyo (JP)**
Erfinder : **Shiokawa, Kozo**
**210-6, Shukugawara Tama-ku**
**Kawasaki-shi Kanagawa-ken (JP)**
Erfinder : **Matsumoto, Noboru**
**39-15, Namiki-cho**
**Hachioji-shi Tokyo (JP)**
Erfinder : **Moriya, Koichi**
**39-15, Namiki-cho**
**Hachioji-shi Tokyo (JP)**
Erfinder : **Izumi, Tetsuji**
**39-15, Namiki-cho**
**Hachioji-shi Tokyo (JP)**

(74) Vertreter : **Schumacher, Günter, Dr. et al**
**c/o Bayer AG Konzernverwaltung RP Patentabteilung**
**D-5090 Leverkusen 1 Bayerwerk (DE)**

**EP 0 222 274 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft neue 2-Hydroxybenzamide, Verfahren zu ihrer Herstellung und ihre Verwendung als Fungizide für Landwirtschaft und Gartenbau.

Es wurde bereits offenbart, daß ein bestimmtes Salicylamid fungizide Aktivitäten auf dem Gebiet der Landwirtschaft und des Gartenbaus aufweist. (Siehe die JP-Osen 39 040/1979 und 204 161/1984).

Nunmehr wurden neue 2-Hydroxybenzamide der Formel (I)

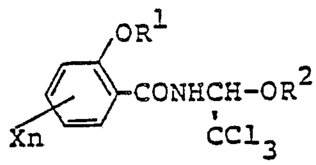

(I)

gefunden, in der

X ein Halogen-Atom, eine Alkyl-Gruppe oder eine Nitro-Gruppe bezeichnet,

n 1 oder 2 bezeichnet,

$R^1$ ein Wasserstoff-Atom, eine Alkylcarbonyl-Gruppe, die durch Halogen substituiert sein kann, oder eine Phenylcarbonyl-Gruppe, die durch wenigstens einen aus der aus Halogen, Alkyl und Alkoxy bestehenden Klasse ausgewählten Substituenten substituiert sein kann, bezeichnet und

$R^2$ eine Alkyl-Gruppe, die durch wenigstens einen aus der aus Halogen, Alkoxy und Alkylthio bestehenden Klasse ausgewählten Substituenten substituiert sein kann, eine Alkenyl-Gruppe, eine Alkinyl-Gruppe oder eine Cycloalkyl-Gruppe, die durch Alkyl substituiert sein kann, bezeichnet.

Die Verbindungen der Formel (I) werden erhalten durch ein Verfahren, bei dem

in dem Fall, in dem $R^1$ in der Formel (I) ein Wasserstoff-Atom, ist,

(a) die Verbindungen der Formel (II)

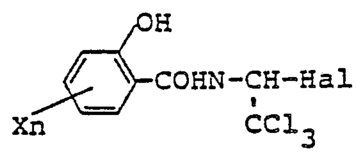

(II)

in der

X und n die oben angegebenen Bedeutungen haben und

Hal ein Halogen-Atom bezeichnet, mit den Verbindungen der Formel (III)

$$R^2{-}OH \qquad \text{(III)}$$

in der $R^2$ die oben angegebenen Bedeutungen hat, in Gegenwart inerter Lösungsmittel, gegebenenfalls in Gegenwart säurebildender Mittel, umgesetzt werden, oder

in dem Fall, in dem $R^1$ in der Formel (I) eine der oben angegebenen, von einem Wasserstoff-Atom verschiedenen Gruppen ist,

b) die Verbindungen der Formel (I-a)

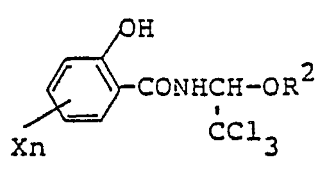

(I-a)

in der X, n und $R^2$ die oben angegebenen Bedeutungen haben mit den Verbindungen der Formel (IV)

$$RCO{-}Hal \qquad \text{(IV)},$$

in der Hal die oben angegebene Bedeutung hat und R eine gegebenenfalls durch Halogen substituierte Alkylcarbonyl-Gruppe oder eine Phenylcarbonyl-Gruppe, die durch wenigstens einen aus der Gruppe Halogen, Alkyl und Alkoxy ausgewählten Substituenten substituiert sein kann,

oder mit den Verbindungen der Formel (V)

$$(RCO)_2O \qquad \text{(V)},$$

in der R die oben angegebene Bedeutung hat, in Gegenwart inerter Lösungsmittel, gegebenenfalls in

Gegenwart säurebildender Mittel, umgesetzt werden.

Die neuen 2-Hydroxybenzamide zeigen potente fungizide Eigenschaften in Landwirtschaft und Gartenbau.

Überraschenderweise zeigen die erfindungsgemäßen 2-Hydroxybenzamide eine wesentlich stärkere fungizide Wirkung als diejenigen, die aus dem oben genannten Stand der Technik bekannt sind.

Unter den erfindungsgemäßen 2-Hydroxybenzamiden der Formel (I) sind bevorzugte Verbindungen diejenigen, in denen

X Fluor, Chlor, Brom, $C_1$-$C_4$-Alkyl oder Nitro ist,

n 1 oder 2 ist,

$R^1$ ein Wasserstoff-Atom oder eine Alkylcarbonyl-Gruppe mit 1 bis 4 Kohlenstoff-Atomen in der Alkyl-Struktureinheit ist und

$R^2$ $C_1$-$C_4$-Alkyl, $C_2$-$C_3$-Alkenyl oder fluor- oder chlor- substituiertes $C_1$-$C_2$-Alkyl ist.

Besonders bevorzugte 2-Hydroxybenzamide der Formel (I) sind diejenigen, in denen

X Chlor, Brom oder Methyl bezeichnet,

n 1 ist,

$R^1$ ein Wasserstoff-Atom oder Acetyl bezeichnet und

$R^2$ Methyl, Ethyl, Allyl oder Fluoroethyl bezeichnet.

Speziell seien die folgenden Verbindungen erwähnt :

N-[2,2,2-Trichloro-1-(2,2,2-trifluoroethoxy) ethyl]-5-chloro-2-hydroxybenzamid,

N-[2,2,2-Trichloro-1-(2,2,2-trifluoroethoxy) ethyl]-2-acetoxy-5-chlorobenzamid,

N-(2,2,2-Trichloro-ethoxyethyl)-5-chloro-2-hydroxybenzamid,

N-(2,2,2-Trichloro-1-allyloxyethyl)-5-chloro-2-hydroxy-benzamid und

N-(2,2,2-Trichloro-1-ethoxy)-5-chloro-2-acetoxybenzamid.

Wenn in dem Verfahren (a) N-(1,2,2,2-Tetrachloroethyl)-5-chloro-2-hydroxybenzamid und 2,2,2-Trifluoroethanol eingesetzt werden, wird das Verfahren druch das folgende Schema dargestellt.

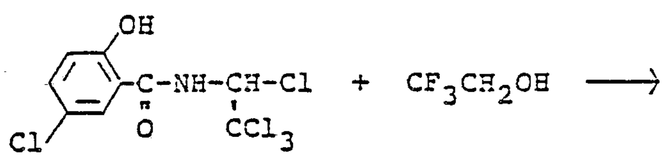

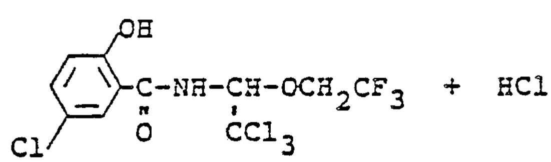

Wenn in dem Verfahren (b) N-[2,2,2-Trichloro-1-(2,2,2-trifluoroethoxy) ethyl]-5-chloro-2-hydroxybenzamid und Acetylchlorid eingesetzt werden, wird das Verfahren durch das folgende Schema dargestellt.

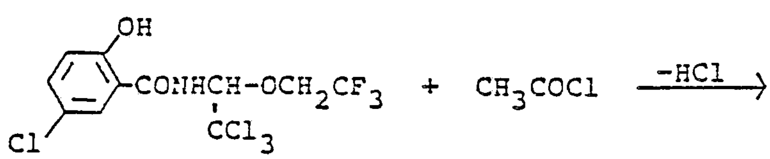

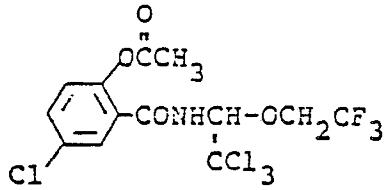

In dem Verfahren (a) bezeichnen die Verbindungen der Formel (II) als Ausgangsstoffe solche aufgrund der vorstehenden Angaben für X und n. Vorzugsweise sind X und n die gleichen, die oben als bevorzugt gennant sind.

Die Verbindungen der Formel (II) schließen neue Verbindungen ein. Die Verbindungen der Formel (II) können beispielsweise durch Reaktion der Verbindungen der allgemeinen Formel

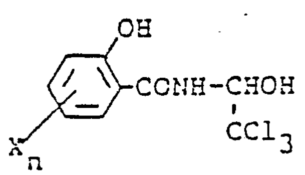

(VI)

in der X und n die oben angegebenen Bedeutungen haben, mit Halogenierungsmitteln nach dem Verfahren gemäß der JP-OS 39 040/1979 erhalten werden.

Die Verbindungen der Formel (IV) sind bekannte Verbindungen (die in der US-PS-2 936 323 und der JP-OS 34 921/1978 beschrieben sind). Sie können in einfacher Weise zum Beispiel dadurch erhalten werden, daß ein Salicylamid der allgemeinen Formel

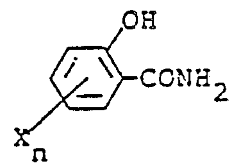

(VII)

in der X und n die oben angegebenen Bedeutungen haben, mit Chloral ($CCl_3CHO$) umgesetzt wird.

Die Salicylamide der Formel (VII) sind im allgemeinen wohlbekannte Verbindungen. Zu speziellen Beispielen zählen

5-Chloro-2-hydroxybenzamid,
5-Bromo-2-hydroxybenzamid,
5-Methyl-2-hydroxybenzamid und
5-Nitro-2-hydroxybenzamid.

Bei dem Verfahren zur Herstellung der obigen Verbindungen der Formel (II) sei Thionylchlorid als Beispiel für die Halogenierungsmittel erwähnt.

Die Verbindungen der Formel (III) bezeichnen solche aufgrund der vorstehenden Angaben für $R^2$. In der Formel (III) ist $R^2$ vorzugsweise gleich einer der Gruppe, die oben als bevorzugt gennant sind.

Die Verbindungen der Formel (III) sind auf dem Gebiet der organischen Chemie wohlbekannt. Zu speziellen Beispielen zählen Methanol, Ethanol, Propanol, Isopropanol, Butanol, Allylalkohol, 2,2,2-Trifluoroethanol, Propargylalkohol, 2,2,2-Trichloroethanol, Ethylenbromhydrin, Cyclopropanmethanol und Cyclohexanol.

In dem Verfahren (b) sind die Verbindungen der Formel (I-a) leicht durch das Verfahren (a) erhältlich.

Die Verbindungen der Formeln (IV) und (V) sind auf dem Gebiet der organischen Chemie wohlbekannt. Zu speziellen Beispielen zählen Chloride, Bromide und Anhydride von Säuren wie Essigsäure, Propionsäure und Buttersäure.

Zweckmäßigerweise kann das Verfahren (a) zur Herstellung der Verbindungen der vorliegenden Erfindung unter Verwendung eines Verdünnungsmittels durchgeführt werden. Zu diesem Zweck können inerte Lösungsmittel, ausgenommen Wasser und Alkohole, verwendet werden.

Zu Beispielen für solche Lösungsmittel zählen aliphatische, alicyclische und aromatische Kohlenwasserstoffe (die gegebenenfalls chloriert sein können) wie Hexan, Cyclohexan, Petrolether, Ligroin, Benzol, Toluol, Xylol, Methylenchlorid, Chloroform, Kohlenstofftetrachlorid, Ethylenchlorid, Trichloroethylen und Chlorbenzol ; Ether wie Diethylether, Methylethylether, Di-isopropylether, Dibutylether, Propylenoxid, Dioxan und Tetrahydrofuran ; Ketone wie Aceton, Methylethylketon, Methylisopropylketon und Methylisobutylketon ; Nitrile wie Acetonitril, Propionitril und Acrylnitril ; Ester wie Ethylacetat und Amylacetat ; Säureamide wie Dimethylformamid und Dimethylacetamid ; Sulfone une Sulfoxide wie Dimethylsulfoxid und Sulfolan ; sowie Basen wie Pyridin.

Die vorstehende Reaktion kann in Gegenwart eines säurebindenden Mittels durchgeführt werden. Zu Beispielen für solche säurebindenden Mittel zählen die Hydoxide, Carbonate, Hydrogencarbonate und Alkoholate von Alkalimetallen sowie tertiäre Amine wie Triethylamin, Diethylanilin und Pyridin, die normalerweise verwendet werden.

Das Verfahren (a) kann innerhalb eines weiten Temperatur-Bereichs, beispielsweise bei einer Temperatur zwischen etwa −20 °C und dem Siedepunkt der Mischung, vorzugsweise etwa 0 °C und etwa 100 °C, praktisch durchgeführt werden. Zweckmäßigerweise wird die Reaktion unter atmosphärischem Druck durchgeführt, jedoch ist es möglich, unter erhöhtem oder vermindertem Druck zu arbeiten.

Bei der Durchführung des Verfahrens (a) können die Verbindungen der Formel (I) dadurch erhalten werden, daß 1 mol der Verbindungen der Formel (II) mit etwa 1 bis 3 mol der Verbindungen der Formel (III) in einem inerten Lösungsmittel umgesetzt wird.

Das Verfahren zur Herstellung der oben beschriebenen Verbindungen der Formel (II) kann mittels Halogenierung in üblicher Weise bei etwa 0 °C bis 100 °C in den gleichen Lösungsmitteln, wie sie oben für das Verfahren (a) gennant sind, durchgeführt werden.

Das Verfahren zur Herstellung der oben beschriebenen Verbindungen der Formel (VI), die einer der Ausgansstoffe für die Herstellung der Verbindungen der Formel (II) sind, kann in den gleichen

Lösungsmitteln, wie sie oben für das Verfahren (a) gennant sind, nach den in der US-PS-2 936 323 und der JP-OS 34 921/1978 beschriebenen Methoden durchgeführt werden.

In der Praxis des Verfahrens (b) können die gleichen Lösungsmittel, wie sie oben für das Verfahren (a) aufgezeigt sind, als geeignete Verdünnungsmittel verwendet werden. Dieses Verfahren kann in Anwesenheit eines säurebindenden Mittels durchgeführt werden. Beispiele für das säurebindende Mittel können diejenigen sein, die oben für das Verfahren (a) aufgeführt sind.

Das Verfahren (b) kann bei Temperaturen innerhalb eines weiten Bereichs, beispielsweise bei einer Temperatur zwischen etwa – 20 °C und 100 °C, vorzugsweise zwischen etwa 0 °C und 50 °C, durchgeführt werden.

Zweckmäßigerweise wird die Reaktion unter atmosphärischem Druck durchgeführt, jedoch ist es auch möglich, unter erhöhtem oder vermindertem Druck zu arbeiten.

Bei der praktrischen Durchführung des Verfahrens (b) können die Verbindungen der Formel (I) beispielsweise dadurch erhalten werden, daß 1 mol der Verbindungen der Formel (I-a) mit etwa 1 bis etwa 2 mol des Säurehalogenids der Formel (IV) oder des Säureanhydrids der Formel (V) in einem inerten Lösungsmittel in Gegenwart einer Base (säurebindendes Mittel) [im Falle der Reaktion mit den Säurehalogeniden der Formel (IV)] umgesetzt wird.

Die aktiven Verbindungen der allgemeinen Formel (I) gemäß der vorliegenden Erfindung zeigen stark ausgeprägte fungizide Wirkung und können insbesondere zur Bekämpfung von Pilzerkrankungen des Bodens eingesetzt werden.

Die aktiven Verbindungen gemäß der vorliegenden Erfindung zeigen stark ausgeprägte mikrobizide Wirkung und können in der Praxis zur Bekämpfung unerwünschter Mikroorganismen eingesetzt werden. Die aktiven Verbindungen sind zur Verwendung als Pflanzenschutzmittel geeignet.

Fungizide Mittel werden im Pflanzenschutz eingesetzt zur Bekämpfung von

Plasmodiophoromycetes,
Oomycetes,
Chytridiomycetes,
Zygomycetes,
Ascomycetes,
Basidiomycetes und
Deuteromycetes,

Bakterizide Mittel werden im Pflanzenschutz eingesetzt zur Bekämpfung von

Pseudomonadaceae,
Rhizobiaceae,
Enterobacteriaceae,
Corynebacteriaceae und
Streptomycetaceae.

Die aktiven Verbindungen der vorliegenden Erfindung zeigen eine besonders überlegene Wirkung gegen Plasmodiophora brassicae, einen zu den Plasmodiophoromycetes gehörenden (Kohlhernie erzeugenden Schimmelpilzen) Pilz.

Einige der Organismen, die fungale und bakterielle Erkrankungen verursachen und unter die oben aufgeführten Sammelbegriffe fallen, seien im Folgenden als nichtbeschränkende Beispiele genannt :

Species Xanthomonas
wie beispielsweise Xanthomonas campestris pv. oryzae ;
Species Pseudomonas
wie beispielsweise Pseudomonas syringae pv. lacrymans ;
Species Erwinia
wie beispielsweise Erwinia amylovora .
Species Pythium
wie beispielsweise Pythium ultimum ;
Species Phytophthora
wie beispielsweise Phytophthora infestans ;
Species Pseudoperonospora
wie beispielsweise Pseudoperonospora cubensis ;
Species Plasmopara
wie beispielsweise Plasmopara viticola ;
Species Peronospora
wie beispielsweise Peronospora pisi oder P. brassicae ;
Species Erysiphe
wie beispielsweise Erysiphe graminis ;
Species Sphaerotheca
wie beispielsweise Sphaerotheca fuliginea ;
Species Podosphaera
wie beispielsweise Podosphaera leucotricha ;
Species Venturia

wie beispielsweise Venturia inaequalis ;
Species Pyrenophora
wie beispielsweise Pyrenophora teres oder P. graminea (Conidiale Form : Drechslera, Synonym : Helminthosporium) ;
Species Cochliobolus
wie beispielsweise Cochliobolus sativus (Conidiale Form : Drechslera, Synonym : Helminthosphorium) ;
Species Uromyces
wie beispielsweise Uromyces appendiculatus ;
Species Puccinia
wie beispielsweise Puccinia recondita ;
Species Tilletia
wie beispielsweise Tilleria caries ;
Species Ustilago
wie beispielsweise Ustilago nuda oder Ustilago avenae ;
Species Pellicularia
wie beispielsweise Pellicularia sasakii ;
Species Piricularia
wie beispielsweise Piricularia oryzae ;
Species Fusarium
wie beispielsweise Fusarium culmorum ;
Species Botrytis
wie beispielsweise Botrytis cinerea ;
Species Septoria
wie beispielsweise Septoria nodorum ;
Species Leptosphaeria
wie beispielsweise Leptosphaeria nodorum ;
Species Cercospora
wie beispielsweise Cercospora canescens ;
Species Alternaria
wie beispielsweise Alternaria brassicae ;
Species Pseudocercosporella
wie beispielsweise Pseudocercosporella herpotrichoides.

Die Verbindungen der vorliegenden Erfindung zeigen auch eine hervorragende Wirkung gegen Rosellinia necatrix, Rhizopus oryzae Aphanomyces cochlioides und haben weiterhin eine ausgezeichnete Wirkung als Industrie-Fungizid gegen einen breiten Bereich zu bekämpfender Fungi wie beispielsweise Aerobacter aerogenes, Staphylococcus aureus, Bacillus subtilis, Escherichia coli, Aspergillus niger, Trichoderma viride, Penicillium sp., Rhizopus sp. und Fusarium sp.

Die gute Tolerierung der aktiven Verbindungen durch die Pflanzen bei den zur Bekämpfung der Pflanzenerkrankungen erforderlichen Konzentrationen erlaubt die Behandlung der oberirdischen Pflanzenteile, der Teile der vegetativen Fortpflanzung und der Samen sowie des Bodens.

Die aktiven Verbindungen können in gebräuchliche Formulierungen überführt werden, etwa Lösungen, Emulsionen, Suspensionen, Pulver, Schäume, Pasten, Granulat, Aerosol, mit der aktiven Verbindung imprägnierte natürliche und synthetische Stoffe, sehr feine Kapseln in polymeren Substanzen, Überzugsmassen zur Verwendung auf Saatgut (Beizmittel) sowie Formulierungen für den Einsatz mit Verbrennungseinrichtungen wie Räucherpatronen, Räucherdosen und Räucherschlagen sowie für die kalte Vernebelung und die warme Vernebelung nach dem Ultra-Low-Volume-Verfahren.

Diese Formulierungen können in bekannter Weise hergestellt werden, beispielsweise durch Vermischen der aktiven Verbindungen mit Streckmitteln, das heißt mit flüssigen oder verflüssigten gasförmigen oder festen Verdünnungsmitteln oder Trägern, gegebenenfalls unter Verwendung grenzflächenaktiver Mittel, das heißt von Emulgatoren und/oder Dispergiermitteln und/oder schaumbildenden Mitteln. Bei Verwendung von Wasser als Streckmitel können organische Lösungsmittel beispielsweise als Hilfslösungsmittel verwendet werden.

Als flüssige Lösungsmittel, Verdünnungsmittel oder Träger hauptsächlich geeignet sind aromatische Kohlenwasserstoffe wie Xylol, Toluol oder Alkylnaphthaline, chlorierte aromatische oder chlorierte aliphatische Kohlenwasserstoffe wie Chlorbenzole, Chloroethylene oder Methylenchlorid, aliphatische Kohlenwasserstoffe wie Cyclohexan oder Paraffine, beispielsweise Mineralöl-Fraktionen, Alkohole wie Butanol oder Glycol sowie deren Ether und Ester, Ketone wie Aceton, Methylethylketon, Methylisobutylketon oder Cyclohexanon oder stark polare Lösungsmittel wie Dimethylformamid und Dimethylsulfoxid sowie auch Wasser.

Unter verflüssigten gasförmigen Verdünnungsmitteln oder Trägern sind Flüssigkeiten zu verstehen, die bei normaler Temperatur und normalem Druck gasförmig wären, beispielsweise Aerosol-Treibmittel wie halogenierte Kohlenwasserstoffe und ebenso auch Butan, Propan, Stickstoff und Kohlenstoffdioxid.

Als feste Träger verwendbar sind gemahlene natürliche Minerale wie Kaoline, Tone, Talkum, Kreide,

Quarz, Attapulgit, Montmorillonit oder Diatomeenerde und gemahlene synthetische Minerale wie hochdisperse Kieselsäure, Aluminiumoxid und Silicate. Als feste Träger für Granulat können zerkleinerte und fraktionierte Natursteinmaterialien verwendet werden, etwa Calcit, Marmor, Bimsstein, Sepiolith und Dolomit sowie synthetisches Granulat aus anorganischen und organischen Mehlen und Granulat aus organischen Materialien wie Sägemehl, Kokosnußschalen, Maiskolben und Tabakstengel.

Als emulgierende und/oder schaumbildende Mittel können nicht-ionische und anionische Emulgatoren wie Polyoxyethylenfettsäureester, Polyoxyethylenfettalkoholether, beispielsweise Alkylarylpolyglycol-Ether, Alkylsulfonate, Alkylsulfate, Arylsulfonate sowie Albumin-Hydrolyseprodukte verwendet werden. Zu Dispergiermitteln zählen beispielsweise Ligninsulfit-Ablaugen und Methylcellulose.

Haftmittel wie Carboxymethylcellulose und natürliche und synthetische Polymere in Form von Pulvern, Granulat oder Latices wie Gummi arabicum, Polyvinylalkohol und Polyvinylacetat können bei der Formulierung verwendet werden.

Es ist möglich, farbgebende Mittel, etwa anorganische Pigmente wie beispielsweise Eisenoxid, Titanoxid und Preußisch Blau und organische Farbstoffe wie Alizarin-Farbstoffe, Azo-Farbstoffe oder Metallphthalocyanin-Farbstoffe, sowie Spuren-Nährstoffe wie Salze von Eisen, Mangan, Bor, Kupfer, Cobalt, Molybdän und Zink zu verwenden.

Die Formulierungen enthalten im allgemeinen 0,1 bis 95 Gew.-%, vorzugsweise 0,5 bis 90 Gew.-%, der aktiven Verbindung.

Die aktiven Verbindungen gemäß der vorliegenden Erfindung können in ihren Formulierungen oder ihren verschiedenen Anwendungsformen als Gemische mit anderen bekannten aktiven Verbindungen vorliegen, etwa mit Fungiziden, Bakteriziden, Insektiziden, Akariziden, Nematiziden, Herbiziden, vogelabweisenden Mitteln, Wachstumsfaktoren, Pflanzennährstoffen und Mitteln zur Verbesserung der Bodenstruktur.

Die aktiven Verbindungen können als solche eingesetzt werden, oder sie können in Form solcher Formulierungen oder Anwendungsformen, die daraus durch weitere Verdünnung hergestellt werden, etwa gebrauchsfertigen Lösungen, Emulsionen, Suspensionen, Pulvern, Pasten oder Granulat, eingesetzt werden. Sie werden in üblicher Weise ausgebracht, etwa durch Bewässern, Eintauchen bzw. Überschwemmen, Spritzen, Zerstäuben, Vernebeln, Verdampfen, Einspritzen, Bilden von Aufschlämmungen, Aufpinseln, Stäuben, Streuen, Trockenbedecken, Feuchtbedecken, Naßbedecken, Schlammbedecken und Umhüllen mit einer Kruste.

Bei der Behandlung von Pflanzenteilen können die Konzentrationen der aktiven Verbindung in den Anwendungsformen innerhalb eines beträchtlichen Bereichs variiert werden. Sie liegen im allgemeinen in einem Bereich von 1 bis 0,0001 Gew.-%, und vorzugsweise von 0,5 bis 0,001 Gew.-%.

Im Fall der Saatgut-Behandlung werden Mengen der aktiven Verbindung von beispielsweise 0,001 bis 50 g, vorzugsweise 0,01 bis 10 g, auf 1 kg des Saatguts zu Anwendung gebracht.

Zur Behandlung des Bodens werden im allgemeinen am Wirkungsort 0,00001 bis etwa 0,1 Gew.-%, insbesondere 0,0001 bis etwa 0,02 Gew.-%, aufgebracht.

## Herstellungsbeispiele

### Beispiel 1 — Verfahren (a)

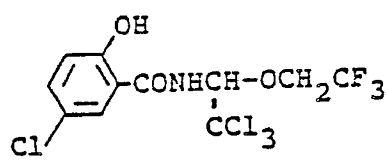

(Verbindung Nr. 4)

Eine Lösung aus N-(1,2,2,2-Tetrachloroethyl)-5-chloro-2-hydroxybenzamid (3,4 g), 2,2,2-Trifluoroethanol (2,0 g) und 50 ml Toluol wurde 24 h zum Rückfluß erhitzt. Die Lösung wurde auf Raumtemperatur abgekühlt, mit einer wäßrigen Natriumhydrogencarbonat-Lösung und mit Wasser gewaschen und dann entwässert. Das Toluol wurde unter vermindertem Druck abgedampft, wonach farblose Kristalle erhalten wurden. Das Trocknen der Kristalle lieferte nahezu reines N-[2,2,2-Trichloro-1-(2,2,2-trifluoroethoxy) ethyl]-5-chloro-2-hydroxybenzamid (3,1 g ; Schmp. 156-159 °C).

### Beispiel 2 — Verfahren (b)

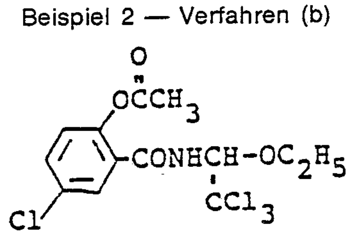

(Verbindung Nr. 20)

N-(2,2,2-Trichloro-1-ethoxyethyl)-5-chloro-2-hydroxybenzamid (6,9 g) wurde in Pyridin (20 ml) bei einer Temperatur unter 10 °C gelöst, und dann wurde Acetylchlorid (1,7 g) bei 0 °C hinzugefügt. Nach der Zugabe wurde die Mischung 1 h bei 10 °C gerührt, in Eiswasser gegossen und dann mit Dichloromethan extrahiert. Die Dichloromethan-Schicht wurde mit einer 1-proz. wäßrigen Salzsäure-Lösung, einer 1-proz. wäßrigen Natriumhydroxid-Lösung und mit Wasser in dieser Reihenfolge gewaschen und dan getrocknet. Das Abdampfen des Dichloromethans unter vermindertem Druck lieferte farbloses, viskoses N-(2,2,2-Trichloro-1-ethoxyethyl)-2-acetoxy-5-chlorobenzamid ; $n_D^{20} = 1,5500$.

Die nachstehende Tabelle 1 faßt Verbindungen gemäß der vorliegenden Erfindung zusammen, die mittels der gleichen Methoden wie in den Beispielen 1 und 2 erhaltent wurden.

Tabelle 1

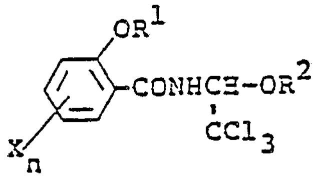

| Verbindung Nr. | $X_n$ | $R^1$ | $R^2$ | Physikalische Konstante |
|---|---|---|---|---|
| 1 | 5-Cl | H | $-C_2H_5$ | Schmp. 126-129°C |
| 2 | 5-Cl | H | $-CH_2CH=CH_2$ | Schmp. 124.5-125.5°C |
| 3 | 5-Cl | H | $-CH_2CH_2Cl$ | Schmp. 150-153°C |
| 4 | 5-Cl | H | $-CH_2CF_3$ | Schmp. 156-159°C |
| 5 | 5-Cl | H | 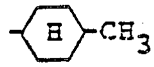 | Schmp. 139-141°C |
| 6 | 5-Br | H | $-CH_2CH_2Cl$ | Schmp. 133-136°C |
| 7 | 5-Br | H | $-C_4H_9$-n | |
| 8 | 5-Br | H | $-CH_2CF_3$ | Schmp. 152-155°C |
| 9 | 5-$CH_3$ | H | $-C_2H_5$ | Schmp. 120-122°C |
| 10 | 5-$CH_3$ | H | $-C_4H_9$-n | Schmp. 98-100°C |
| 11 | 5-$CH_3$ | H | $-CH_2CF_3$ | $n_D^{20}$ 1.5356 |
| 12 | 5-Cl | $-\overset{O}{\overset{\|}{C}}-CH_3$ | $-CH_2CF_3$ | $n_D^{22}$ 1.5153 |
| 13 | 5-Cl | H | $-CH_3$ | Schmp. 143-147°C |
| 14 | 5-Cl | H | $-C_3H_7$-n | Schmp. 99-102°C |
| 15 | 5-Cl | H | $-C_3H_7$-iso | Schmp. 134-137°C |
| 16 | 5-Cl | H | $-CH_2C\equiv CH$ | Schmp. 156-157°C |
| 17 | 5-F | H | $-C_2H_5$ | |
| 18 | 5-F | H | $-CH_2CH=CH_2$ | |

Tabelle 1 (Fortsetzung)

| Verbindung Nr. | $X_n$ | $R^1$ | $R^2$ | Physikalische Konstante |
|---|---|---|---|---|
| 19 | 5-Cl | H | $-CH_2CH_2OCH_3$ | Schmp. 116-118 °C |
| 20 | 5-Cl | $-COCH_3$ | $-C_2H_5$ | $n_D^{20}$ 1.5500 |
| 21 | 5-Cl | $-COCH_2Cl$ | $-C_2H_5$ | $n_D^{20}$ 1.5630 |
| 22 | 5-Cl | $-COCCl_3$ | $-C_2H_5$ | |
| 23 | 5-Cl | $-COC_2H_5$ | $-C_2H_5$ | $n_D^{20}$ 1.5440 |
| 24 | 5-Cl | $-COC_4H_9$ | $-C_2H_5$ | $n_D^{20}$ 1.5432 |
| 25 | 5-Cl | 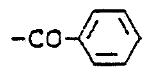 | $-C_2H_5$ | $n_D^{40}$ 1.5802 |
| 26 | 5-Cl | 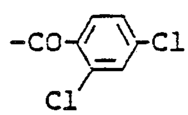 | $-CH_2CH=CH_2$ | |
| 27 | 3,5-$Cl_2$ | H | $-C_2H_5$ | Schmp.124-125 °C |
| 28 | 3,5-$Cl_2$ | H | $-CH_2CH=CH_2$ | Schmp.121-123 °C |
| 29 | 3,5-$Cl_2$ | H | $-CH_2CF_3$ | Schmp.103-105 °C |
| 30 | 5-$NO_3$ | H | $-C_2H_5$ | Schmp.167-170 °C |
| 31 | 5-Cl | H | $-CH_2CH_2CH_2Br$ | |
| 32 | 5-Cl | H | 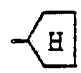 | |
| 33 | 3,5-$Br_2$ | H | $-CH_3$ | |
| 34 | 5-Cl | 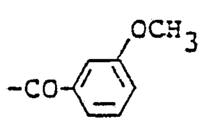 | $-C_2H_5$ | |
| 35 | 5-Cl | 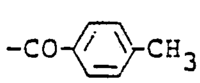 | $-C_2H_5$ | |
| 36 | 5-Cl | H | $-CH_2CH_2SCH_3$ | |

Beispiel 3 — Synthese eines Zwischenproduktes

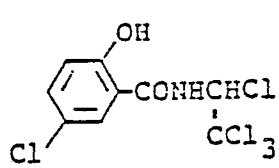

Thionylchlorid (1 g) wurde zu einer Mischung von fein gemahlenem N-(1-Hydroxy-2,2,2-trichloroethyl)-5-chloro-2-hydroxybenzamid (31,9 g) und Chloroform (150 ml) hinzugegeben, und eine katalytische Menge Pyridin wurde hinzugefügt. Die Mischung wurde unter Rückfluß gerührt, bis eine klare Lösung entstanden war. Anschließend wurden Chloroform und das überschüssige Thionylchlorid unter vermindertem Druck abgedampft, wonach ein farbloser fester Stoff erhalten wurde. Dieses Produkt wird ohne Reinigung als Zwischenprodukt eingesetzt ; Schmp. 137-141 °C.

## Biologische Test-Beispiele

Vergleichs-Verbindungen

Kontrolle A-1 :

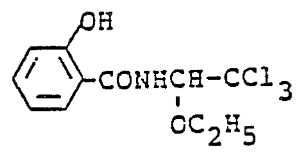

(die in der JP-Patentveröffentlichung Nr. 35 662/1981 beschriebene Verbindung) ;
B-1

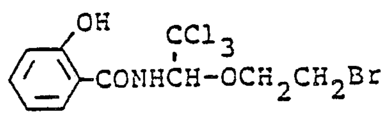

(die in der JP-OS 204 161/1984 beschriebene Verbindung) ;

PCNB : Pentachloronitrobenzol, 20 % Stäubemittel ;
TPN : Tetrachloroisophthalsäurenitril, 75 % benetzbares Pulver ;
Benomyl : Methyl-1-(butylcarbamoyl)-2-benzimidazolcarbamat, 20 % benetzbares Pulver.

## Beispiel 4

Test der Bekämpfung von Kohlhernie bei « Komatsuna » (einer Varietät chinesischen Kohls) :

Präparat einer aktiven Verbindung :

| | |
|---|---|
| Aktive Verbindung | 1,5 Teile |
| Isopropylhydrogenphosphat (PAP) | 0,5 Teile |
| Ton-Pulver | 98 Teile. |

Die oben angegebenen Stoffe wurden pulverisiert und vermischt, wodurch ein Stäubemittel erhalten wurde.

Test-Verfahren

Mit Plasmodiophora brassicae infizierte Erde wurde in unglasierte Töpfe mit einem Durchmesser von 21 cm gefüllt, und ein Stäubemittel einer Verbindung gemäß der vorliegenden Erfindung, das wie oben angegeben hergestellt worden war, wurde in einer vorher festgelegten Konzentration gleichmäßig mit der Erde vermischt.

Samen von « Komatsuna » (Varietät : Misugi) wurden in einer Menge von 20 Körnern pro Topf eingesät. Die Töpfe wurden 4 Wochen in einem auf 20 °C gehaltenen klimatisierten Gewächshaus gehalten. Dann wurden die Pflanzen ausgegraben, und die Krankheitszustand wurde nach dem folgenden Maßstag bewertet. Der Erkrankungs-Index und das Verhältnis der erkrankten Pflanzen berechnet.

Grad der Erkrankung :

3 : $L_1$ = Zahl der Pflanzen, deren Wurzeln durch das Auftreten der Kohlhernie (Kropfkrankheit) sehr stark vergbrößert worden waren ;

2 : $L_2$ = Zahl der Pflanzen, bei denen Kohlhernie auftrat, jedoch auf die Pfahlwurzeln beschränkt war ;

1 : $L_3$ = Zahl der Pflanzen, bei denen geringfügiges Auftreten von Kohlhernie beobachtet wurde ;

0 : $L_4$ = Zahl der gesunden Pflanzen.

$$\text{Erkrankungs-Index} = \frac{3 \times L_1 + 2 \times L_2 + 1 \times L_3}{3 \times (L_1 + L_2 + L_3 + L_4)} \times 100$$

$$\text{Verhältnis der erkrankten Pflanzen} = \frac{L_1 + L_2 + L_3}{L_1 + L_2 + L_3 + L_3)} \times 100$$

Die Ergebnisse sind in der Tabelle 2 aufgeführt.

Tabelle 2

| Verbindung Nr. | Menge des Wirkstoffs kg/ha | Erkrankungs-Index % | Verhältnis der erkrankten Pflanzen % | Phytotoxizität |
|---|---|---|---|---|
| 1 | 5 | 0 | 0 | keine |
| 2 | 5 | 0 | 0 | keine |
| 4 | 5 | 0 | 0 | keine |
| 8 | 5 | 1,3 | 7 | keine |
| 12 | 5 | 0 | 0 | keine |
| Kontrolle | | | | |
| A-1 | 20 | 33,3 | 45 | keine |
| | 10 | 80 | 85 | " |
| | 5 | 81,7 | 95 | " |
| B-1 | 20 | 51,7 | 65 | keine |
| | 10 | 83,3 | 90 | " |
| | 5 | 91,7 | 100 | " |
| PCNB handelsüblich | 60 | 58,3 | 75 | keine |
| unbehandelt | - | 95 | 100 | - |

Beispiel 5

Test der Bekämpfung der Umfallens von Reis-Setzlingen (Wurzelbrand der Keimpflanzen)

Präparat einer Test-Verbindung :

| | |
|---|---|
| Aktive Verbindung | 50 Gew.-Teile ; |
| Träger | 45 Gew.-Teile einer Mischung aus Diatomeenerde und Kaolin (1 : 5), |
| Emulgator | 5 Gew. Teile Polyoxyethylenalkylphenylether. |

Die aktive Verbindung, der Träger und der Emulgator in den oben angegebenen Mengen wurden pulverisiert und miteinander zu einem benetzbaren Pulver vermischt. Eine vorher festgelegte Menge des benetzbaren Pulvers wurde mit Wasser vermischt.

Test-Verfahren

Sterilisierte Erde wurde mit in Reiskleie kultiviertem Rhizopus oryzae inokuliert. Die Erde wurde in

Anzuchtkästen für Sämlinge (60 cm × 40 cm × 3 cm) eingefüllt. Die wie oben angegeben präparierte aktive Verbindung wurde in vorher festgelegter Konzentration in einer Menge von 500 ml pro Kasten gleichmäßig in die Erde hineinangegossen. Samen von Reis (Varietät : Kusabue) wurden in einer Menge von 200 g (Trockengewicht) pro Kasten ausgesät und drei Tage in einer Anzucht-Vorrichtung bei 32 °C kultiviert. Danach wurden die Anzucht-Kästen in ein Glashaus überführt und in üblicher Weise gehalten. 20 Tage später wurden 200 Setzlinge aus der Mitte jedes Anzuchtkastens herausgezogen, und der Grad der Verletzung wurde nach dem folgenden Maßstab bewertet. Der Bekämpfungs-Index und das Verhältnis der gesunden Setzlinge wurden berechnet.

Grad der Verletzung :

0 : $n_0$ = gesunde Setzlinge ;

1 : $n_1$ = Setzlinge, bei denen das Wachstum der Haarwurzeln in geringem Maße schlecht war ;

2 : $n_2$ = Setzlinge, bei denen eine keulenartige Verformung teilweise an den Pfahlwurzeln beobachtet wurde ;

3 : $n_3$ = Setzlinge, bei denen das Wachstum der Pfahlwurzeln außerordentlich schlecht war und viele keulenartige Verformungen auftraten ;

4 : $n_4$ = Setzlinge, die keulenartig geworden waren, mit gehemmtem Wachstum der Pfahlwurzeln und Deckwurzeln.

Die Ergebnisse sind in der Tabelle 3 aufgeführt.

Tabelle 3

| Verbindung Nr. | Konzentration des Wirkstoffs % | Verhältnis der gesunden Setzlinge % | Grad der Verletzung % | Bekämpfungs-Index % |
|---|---|---|---|---|
| 2 | 0,1 | 90,5 | 2,7 | 95 |
| 4 | 0,1 | 91,5 | 2,5 | 95 |
| 12 | 0,1 | 90,5 | 3,0 | 94 |
| 13 | 0,1 | 85,0 | 3,0 | 94 |
| Kontrolle | | | | |
| A-1 | 0,1 | 35,5 | 28,3 | 43 |
| B-1 | 0,1 | 55,5 | 19,6 | 60 |
| TPN handelsüblich | 0,15 | 75,5 | 7,3 | 85 |
| unbehandelt | - | 3,5 | 49,3 | 0 |

Beispiel 6

Test der Bekämpfung des Wurzelschimmels beim Apfel

In Reiskleie kultivierter Rosellinia necatrix wurde in sterilisierte Erde inokuliert, um eine infizierte Erde herzustellen. Eine wie in Beispiel 5 präparierte aktive Verbindung in vorher festgelegter Konzentration wurde in einer Menge von 5 ml pro 100 ml Erde gleichmäßig in die Erde hineingegossen und ausreichend mit dieser vermischt. Abgeschnittene Apfelzweige (Varietät : Star King) wurden senkrecht in der Erde eingebettet, so daß die Hälfte jedes Zweiges in der Erde steckte. Die Zweige wurden dann unter Gewächshaus-Bedingungen bei 25 °C gehalten. Drei Wochen später wurde der Grad des Befalls der Zweige durch den oben bezeichneten Pilz beurteilt und nach dem Grad der Verletzung anhand der folgenden Skala von 1 bis 5 bewertet :

0 : Kein Befall ;
1 : geringfügiger Befall wurde beobachtet ;
2 : Befall wurde beobachtet auf 3 % bis weniger als 10 % der Oberfläche der Zweige ;
3 : Befall wurde beobachtet auf 10 % bis weniger als 30 % der Oberfläche der Zweige ;
4 : Befall wurde beobachtet auf 30 % bis weniger als 50 % der Oberfläche der Zweige ;
5 : Befall wurde beobachtet auf wenigstens 50 % der Oberfläche der Zweige.

Der Ergebnisse sind in der Tabelle 4 aufgeführt.

Tabelle 4

| Verbindung Nr. | Konzentration des Wirkstoffs % | Grad der der Verletzung |
|---|---|---|
| 8 | 0,1 | 0,5 |
| 12 | 0,1 | 0 |
| 13 | 0,1 | 0,5 |
| 20 | 0,1 | 0,3 |
| Kontrolle A-1 | 0,1 | 3 |
| Benomyl handelsüblich | 0,1 | 1 |
| unbehandelt | - | 5 |

**Patentansprüche**

1. 2-Hydroxybenzamide der Formel

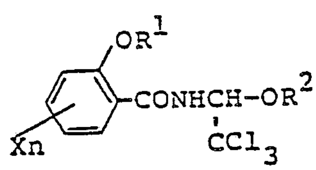

(I)

in der

X ein Halogen-Atom, eine Alkyl-Gruppe oder eine Nitro-Gruppe bezeichnet,

n 1 oder 2 bezeichnet,

$R^1$ ein Wasserstoff-Atom, eine Alkylcarbonyl-Gruppe, die durch Halogen substituiert sein kann, oder eine Phenylcarbonyl-Gruppe, die durch wenigstens einen aus der aus Halogen, Alkyl und Alkoxy bestehenden Klasse ausgewählten Substituenten substituiert sein kann, bezeichnet und

$R^2$ eine Alkyl-Gruppe, die durch wenigstens einen aus der aus Halogen, Alkoxy und Alkylthio bestehenden Klasse ausgewählten Substituenten substituiert sein kann, eine Alkenyl-Gruppe, eine Alkinyl-Gruppe oder eine Cycloalkyl-Gruppe, die durch Alkyl substituiert sein kann, bezeichnet.

2. Verbindungen nach Anspruch 1, dadurch gekennzeichnet, daß

X Fluor, Chlor, Brom, $C_1$-$C_4$-Alkyl oder Nitro ist,

n 1 oder 2 ist,

$R^1$ ein Wasserstoff-Atom oder eine Alkylcarbonyl-Gruppe mit 1 bis 4 Kohlenstoff-Atomen in der Alkyl-Struktureinheit ist und

$R^2$ $C_1$-$C_4$-Alkyl, $C_2$-$C_3$-Alkenyl oder fluor- oder chlorsubstituiertes $C_1$-$C_2$-Alkyl ist.

3. Verbindungen nach Anspruch 1, dadurch gekennzeichnet, daß

X Chlor, Brom oder Methyl ist,

n 1 ist,
$R^1$ ein Wasserstoff-Atom oder Acetyl ist und
$R^2$ Methyl, Ethyl, Allyl oder Fluoroethyl ist.

4. Verbindungen nach Anspruch 1 mit den Formeln

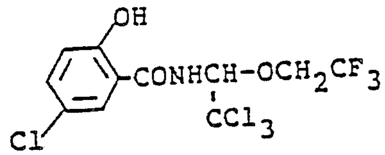 ,

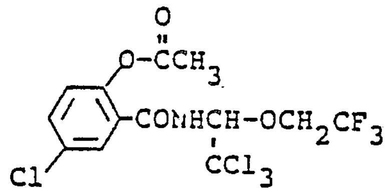 ,

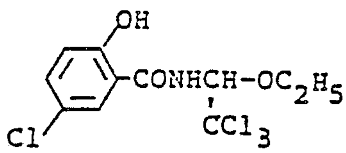 oder

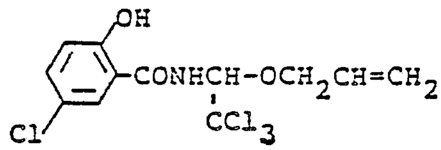 .

5. Verfahren zur Herstellung von 2-Hydroxybenzamiden der Formel

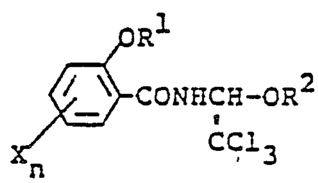 (I)

in der
X ein Halogen-Atom, eine Alkyl-Gruppe oder eine Nitro-Gruppe bezeichnet,
n 1 oder 2 bezeichnet,
$R^1$ ein Wasserstoff-Atom, eine Alkylcarbonyl-Gruppe, die durch Halogen substituiert sein kann, oder eine Phenylcarbonyl-Gruppe, die durch wenigstens einen aus der aus Halogen, Alkyl und Alkoxy bestehenden Klasse ausgewählten Substituenten substituiert sein kann, bezeichnet und
$R^2$ eine Alkyl-Gruppe, die durch wenigstens einen aus der aus Halogen, Alkoxy und Alkylthio bestehenden Klasse ausgewählten Substituenten substituiert sein kann, eine Alkenyl-Gruppe, eine Alkinyl-Gruppe oder eine Cycloalkyl-Gruppe, die durch Alkyl substituiert sein kann, bezeichnet, dadurch gekennzeichnet, daß in dem Fall, in dem $R^1$ in der Formel (I) ein Wasserstoff-Atom ist,
(a) die Verbindungen der Formel (II)

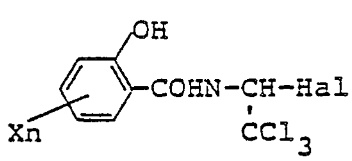 (II)

in der
X und n die oben angegebenen Bedeutungen haben und
Hal ein Halogen-Atom bezeichnet, mit den Verbindungen der Formel (III)

$$R^2{-}OH \qquad (III),$$

in der $R^2$ die oben angegebenen Bedeutungen hat, in Gegenwart inerter Lösungsmittel, gegebenenfalls in Gegenwart säurebildender Mittel, umgesetzt werden, oder

in dem Fall, in dem $R^1$ in der Formel (I) eine der oben angegebenen, von einem Wasserstoff-Atom verschiedenen Gruppen ist,

(b) die Verbindungen der Formel (I-a)

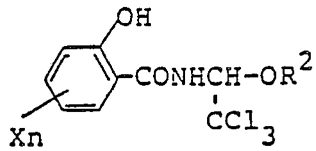

(I-a)

in der X n und $R^2$ die oben angegebenen Bedeutungen haben mit den Verbindungen der Formel (IV)

$$RCO-Hal \quad (IV),$$

in der Hal die oben angegebene Bedeutung hat und R eine gegebenenfalls durch Halogen substituierte Alkylcarbonyl-Gruppe oder eine Phenylcarbonyl-Gruppe, die durch wenigstens einen aus der Gruppe Halogen, Alkyl und Alkoxy ausgewählten Substituenten substituiert sein kann, oder mit den Verbindungen der Formel (V)

$$(RCO)_2O \quad (V),$$

in der R die oben angegebene Bedeutung hat, in Gegenwart inerter Lösungsmittel, gegebenenfalls in Gegenwart säurebildender Mittel, umgesetzt werden.

6. Fungizide Mittel gegen Erkrankungen unterirdischer Pflanzenteile, dadurch gekennzeichnet, daß sie wenigstens ein 2-Hydroxybenzamid der Formel (I) enthalten.

7. Verfahren zur Verhütung von Erkrankungen unterirdischer Pflanzenteile, dadurch gekennzeichnet, daß man 2-Hydroxybenzamide der Formel (I) auf Pathogene und/oder den Ort ihres Auftretens und den Ort des Auftretens von Pflanzenerkrankungen einwirken läßt.

8. Verwendung von 2-Hydroxybenzamiden der Formel (I) zur Verhütung von Erkrankungen unterirdischer Pflanzenteile.

9. Verfahren zur Herstellung von fungiziden Mitteln gegen Pflanzenerkrankungen im Boden, dadurch gekennzeichnet, daß 2-Hydroxybenzamide der Formel (I) mit Streckmitteln und/oder grenzflächenaktiven Mitteln vermischt werden.

**Claims**

1. 2-Hydroxybenzamide of the formula

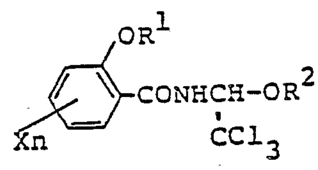

(I)

in which

X signifies a halogen atom, an alkyl group or a nitro group,

n signifies 1 or 2,

$R^1$ signifies a hydrogen atom, an alkylcarbonyl group which is optionally substituted by halogen, or a phenylcarbonyl group which is optionally substituted by at least one substituent chosen from the series comprising halogen alkyl and alkoxy, and

$R^2$ signifies an alkyl group which is optionally substituted by a substituent chosen from the series comprising halogen, alkoxy and alkylthio, an alkenyl group, an alkynyl group or a cycloalkyl group which is optionally substituted by alkyl.

2. Compounds according to Claim 1, characterized in that

X in fluorine, chlorine, bromine, $C_1$-$C_4$-alkyl or nitro,

n is 1 or 2,

$R^1$ is a hydrogen atom or an alkylcarbonyl group having 1 to 4 carbon atoms in the alkyl moiety, and

$R^2$ is $C_1$-$C_4$-alkyl, $C_2$-$C_3$-alkenyl, or fluorine-substituted or chlorine-substituted $C_1$-$C_2$-alkyl.

3. Compounds according to Claim 1, characterized in that

X is chlorine, bromine or methyl,

n is 1,

$R^1$ is a hydrogen atom or acetyl, and
$R^2$ is methyl, ethyl, allyl or fluoroethyl.

4. Compounds according to Claim 1, having the formulae

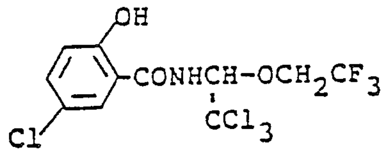

,

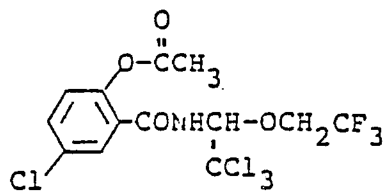

,

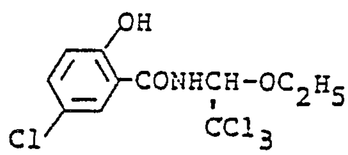

or

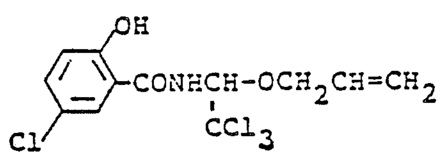

5. Process for the preparation of 2-hydroxybenzamides of the formula

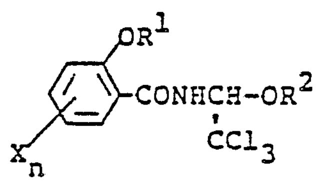

(I)

in which

X signifies a halogen atom, an alkyl group or a nitro group,

n signifies 1 or 2,

$R^1$ signifies a hydrogen atom, an alkylcarbonyl group which is optionally substituted by halogen, or a phenylcarbonyl group which is optionally substituted by at least one substituent chosen from the series comprising halogen, alkyl and alkoxy, and

$R^2$ signifies an alkyl group which is optionally substituted by at least one substituent chosen from the series comprising halogen, alkoxy and alkylthio, an alkenyl group, an alkynyl group or a cycloalkyl group which is optionally substituted by alkyl,

characterized in that in the case where $R^1$ in formula (I) is a hydrogen atom,

a) the compounds of the formula (II)

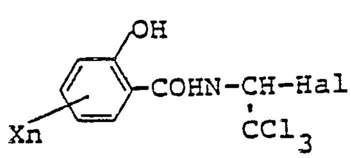

(II)

in which X and n have the abovementioned meanings and Hal signifies a halogen atom, are reacted with the compounds of the formula (III)

$$R^2{-}OH \qquad (III),$$

in which $R^2$ has the abovementioned meanings, in the presence of inert solvents and, if appropriate, in the presence of acid-binding agents, or,
in the case where $R^1$ in formula (I) is one of the groups mentioned above, other than a hydrogen atom,

b) the compounds of the formula (I-a)

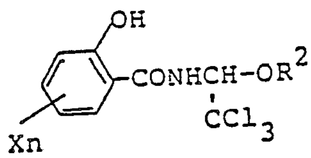

(I-a)

in which X n and $R^2$ have the bovementioned meanings are reacted with the compounds of the formula (IV)

RCO−Hal (IV),

in which Hal has the abovementioned meaning and R is an alkylcarbonyl group which is optionally substituted by halogen, or a phenylcarbonyl group which is optionally substituted by at least one substituent chosen from the series comprising halogen, alkyl and alkoxy, or with the compounds of the formula (V)

$(RCO)_2O$ (V),

in which R has the abovementioned meaning, in the presence of inert solvents and, if appropriate, in the presence of acid-binding agents.

6. Fungicidal agents against diseases of sub-soil parts of plants, characterized in that they contain at least one 2-hydroxybenzamide of the formula (I).

7. Method for preventing diseases of sub-soil parts of plants, characterized in that 2-hydroxybenzamide of the formula (I) is allowed to act on pathogens and/or the place of their appearance and the place of appearance of plant diseases.

8. Use of 2-hydroxybenzamides of the formula (I) for preventing diseases of sub-soil parts of plants.

9. Method for the preparation of fungicidal agents against plant diseases in the soil, characterized in that 2-hydroxybenzamides of the formula (I) are mixed with extenders and/or surfactants.

**Revendications**

1. 2-hydroxybenzamides de formule

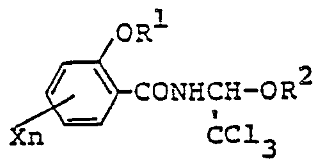

(I)

dans laquelle

X représente un atome d'halogène, un groupe alkyle ou un groupe nitro,

n est égal à 1 ou 2,

$R^1$ représente un atome d'hydrogène, un groupe alkylcarbonyle qui peut être substitué par des halogènes ou un groupe phénylcarbonyle qui peut porter au moins un substituant choisi parmi les halogènes, les groupes alkyle et alcoxy, et

$R^2$ représente un groupe alkyle qui peut porter au moins un substituant choisi parmi les halogènes, les groupes alcoxy et alkylthio, un groupe alcényle, un groupe alcynyle ou un groupe cycloalkyle qui peut être substitué par un groupe alkyle.

2. Composés selon la revendication 1, caractérisés en ce que :

X représente le fluor, le chlore, le brome, un groupe alkyle en $C_1$-$C_4$ ou nitro,

n est égal à 1 ou 2,

$R^1$ représente un atome d'hydrogène ou un groupe alkylcarbonyle contenant 1 à 4 atomes de carbone dans le motif de structure alkyle, et

$R^2$ représente un groupe alkyle en $C_1$-$C_4$, alcényle en $C_2$-$C_3$ ou un groupe alkyle en $C_1$-$C_2$ substitué par le fluor ou le chlore.

3. Composés selon la revendication 1, caractérisés en ce que :

X représente le chlore, le brome ou un groupe méthyle,

n est égal à 1,

$R^1$ représente un atome d'hydrogène ou un groupe acétyle, et
$R^2$ représente un groupe méthyle, éthyle, allyle ou fluoréthyle.

4. Composés selon la revendication 1, répondant aux formules

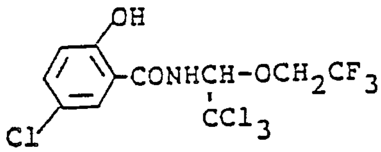

,

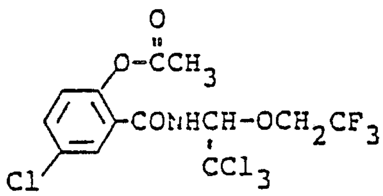

,

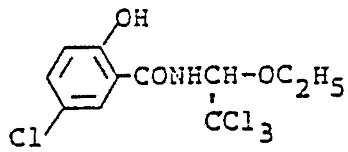

ou

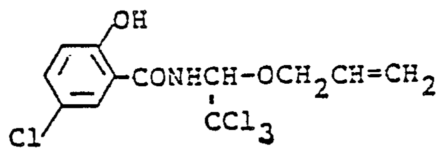

5. Procédé de préparation des 2-hydroxybenzamides de formule

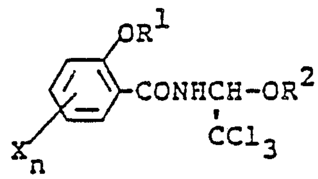

(I)

dans laquelle

X représente un atome d'halogène, un groupe alkyle ou un groupe nitro,

n est égal à 1 ou 2,

$R^1$ représente un atome d'hydrogène, un groupe alkylcarbonyle qui peut être substitué par des halogènes ou un groupe phénylcarbonyle qui peut porter au moins un substituant choisi parmi les halogènes, les groupes alkyle et alcoxy, et

$R^2$ représente un groupe alkyle qui peut porter au moins un substituant choisi parmi les halogènes, les groupes alcoxy et alkylthio, un groupe alcényle, un groupe alcynyle ou un groupe cycloalkyle qui peut être substitué par un groupe alkyle,

caractérisé en ce que : lorsque $R^1$ de la formule I représente un atome d'hydrogène,

(a) on fait réagir les composés de formule II

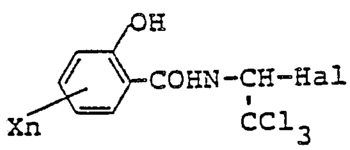

(II)

dans laquelle

X et n ont les significations indiquées ci-dessus, et

Hal représente un atome d'halogène, avec les composés de formule III

$$R^2\text{–OH} \quad \text{(III)}$$

dans laquelle $R^2$ a les significations indiquées ci-dessus, en présence de solvants inertes, éventuellement en présence de capteurs d'acides, ou bien
lorsque $R^1$ de la formule I représente l'un des groupes variés mentionnés ci-dessus et non un atome d'hydrogène,

(b) on fait réagir les composés de formule I-a

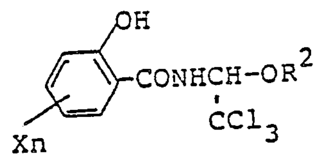

(I-a)

dans laquelle X, n et $R^2$ ont les significations indiquées ci-dessus, avec les composés de formule IV

$$RCO-Hal \qquad (IV)$$

dans laquelle Hal a les significations indiquées ci-dessus, et R représente un groupe alkylcarbonyle éventuellement substitué par des halogènes ou un groupe phénylcarbonyle qui peut porter au moins un substituant choisi parmi les halogènes, les groupes alkyle et alcoxy, ou avec des composés de formule V

$$(RCO)_2O \qquad (V)$$

dans laquelle R a les significations indiquées ci-dessus, en présence de solvants inertes, éventuellement en présence de capteurs d'acides.

6. Produits fongicides contre les maladies des parties souterraines des végétaux, caractérisés en ce qu'ils contiennent au moins un 2-hydroxybenzamide de formule I.

7. Procédé pour prévenir les maladies des parties souterraines des végétaux, caractérisé en ce que l'on fait agir des 2-hydroxybenzamides de formule I sur les germes pathogènes et/ou l'endroit où ils apparaissent et l'endroit où les maladies des végétaux sont apparues.

8. Utilisation des 2-hydroxybenzamides de formule I dans la prévention des maladies des parties souterraines des végétaux.

9. Procédé de préparation de produits fongicides contre les maladies des végétaux dans le sol, caractérisé en ce que l'on mélange des 2-hydroxybenzamides de formule I avec des diluants et/ou des agents tensioactifs.